# EUROPÄISCHE PATENTSCHRIFT

(11) **EP 3 080 456 B1**
(45) Veröffentlichungstag und Bekanntmachung des Hinweises auf die Patenterteilung: **22.11.2017**
(21) Anmeldenummer: 14821505.6
(22) Anmeldetag: 12.12.2014
(51) Int. Cl.: B01D 46/00, B01D 46/10, F04C 27/02, F04C 18/16, F04C 29/02

(54) **VERDICHTER**
COMPRESSOR
COMPRESSEUR

(30) Priorität: 12.12.2013 DE 102013020532
(43) Veröffentlichungstag der Anmeldung: 19.10.2016
(73) Patentinhaber: GEA Refrigeration Germany GmbH, 13509 Berlin (DE)
(72) Erfinder: LOSCH, Stefan, 13509 Berlin (DE); NIPPERT, Thomas, 13509 Berlin (DE)
(74) Vertreter: Mederle-Hoffmeister, Stefan
(86) Internationale Anmeldenummer: PCT/EP2014/003348
(87) Internationale Veröffentlichungsnummer: WO 2015/086161

(56) Entgegenhaltungen:
- EP-A1- 0 540 459
- WO-A1-2005/057014
- WO-A2-2010/012570
- DE-A1- 3 344 953
- JP-A- H05 141 371

## Beschreibung

Die vorliegende Erfindung betrifft einen Schraubenverdichter gemäß dem Oberbegriff des Patentanspruchs 1.

Es gibt sowohl Schraubenverdichter , die in einer Trockenlauf-Betriebsweise arbeiten, als auch Schraubenverdichter, die in einer ölüberfluteten Betriebsweise arbeiten. Bei den zuletzt genannten Schraubenverdichtern findet Öl sowohl als Schmiermittel, als auch beim Verdichtungsvorgang selbst als Dichtmittel Verwendung. Um jedoch keinen unerwünschten Öleintrag in eine Kälteanlage zu erhalten, die von dem Verdichter mit verdichtetem Kältemittel versorgt wird, ist in der Regel ein Ölabscheider auf einer Hochdruckseite solcher Schraubenverdichter vorgesehen.

Nach dem Stand der Technik besteht ein Ölabscheider eines semihermetischen Kompaktschraubenverdichters aus zwei Räumen getrennt durch einen Demistor aus Metallgestrick. Komprimiertes Gas-Ölgemisch (Kältemittel-Öl-Gemisch) gelangt aus einem Druckrohr in den ersten Raum, in dem eine Vorabscheidung insbesondere an einer Begrenzungswand des ersten Raums stattfindet. Danach strömt das Gas mit reduziertem Ölgehalt und ggf. neuerlich durch den Gasstrom mitgerissenes bereits abgeschiedenes Öl aus dem ersten Raum durch den Demistor in den zweiten Raum. Im Demistor reduziert sich der Ölgehalt im Gas weiter. Die restliche Ölabscheidung findet im zweiten Raum statt.

Bei der beschriebenen Konstruktion jedoch steht der untere Teil des Demistorgestrickes im bereits abgeschiedenen Öl und ein Teil des Öls wird durch Kapillarkräfte nach oben gezogen und mischt sich wieder mit dem Gas. Weiterhin haben, abhängig von Betriebsbedingungen, die Gas- und Ölphasen im Gestrick unterschiedlichen Strömungswiderstand und demzufolge ist das Ölniveau im ersten und im zweiten Raum unterschiedlich hoch. Als Ergebnis strömt das Gas teilweise durch das bereits abgeschiedene Öl und damit vermischen sich die Phasen wieder.

Ein weiterer Verdichter mit Schmiermittel ist aus der WO 2010 / 012 570 A2 bekannt, welcher ein Außengehäuse, ein in dem Außengehäuse angeordnetes Verdichterschraubengehäuse, in welchem Läuferbohrungen für Schraubenläufer angeordnet sind, einen in dem Außengehäuse auf einer Seite des Verdichterschraubengehäuses angeordneten Antrieb, ein in dem Außengehäuse auf einer dem Antrieb gegenüberliegenden Seite des Verdichterschraubengehäuses angeordnetes Lagergehäuse, und einen innerhalb des Außengehäuses angeordneten und vom verdichteten Arbeitsmedium durchströmten Schalldämpfer offenbart, wobei der Schalldämpfer das verdichtete Arbeitsmedium in einem Innenraum mittels einer Strömungsführung als einen um eine Achse umlaufenden Umlaufstrom führt, wobei aus dem Umlaufstrom des Arbeitsmediums durch Zentrifugalkräfte eine Abscheidung von Schmiermittel erfolgt.

Ein weiterer, ähnlicher Verdichter ist aus der WO 2005 / 057 014 A1 bekannt.

Ausgehend hiervon ist es die Aufgabe der vorliegenden Erfindung, einen Schraubenverdichter anzugeben, der eine möglichst effiziente Ölabscheidung aufweist.

Diese Aufgabe wird durch einen Schraubenverdichter mit den Merkmalen des Patentanspruchs 1 gelöst.

Demnach wird die Aufgabenstellung durch einen Schraubenverdichter mit einer Verdichtungsvorrichtung, insbesondere wenigstens einem Schraubenläufer, gelöst, bei welchem die Verdichtungsvorrichtung ein verdichtetes Medium einer Ölabscheidevorrichtung zuführt. Die Ölabscheidevorrichtung weist ein erstes Volumen und ein zweites Volumen, sowie eine das erste und das zweite Volumen voneinander trennende Trennvorrichtung auf, welche einen Demistor zum Abscheiden von Öl aufweist. Der Demistor ist in einem ersten Abschnitt der Tennvorrichtung angeordnet, welcher in der Regel ein in Betrieb des Verdichters oben angeordneter Abschnitt ist, und ein zweiter Abschnitt der Trennvorrichtung ist als Trennwand ausgebildet ist, welche eine oder mehrere Ölkommunikationsöffnungen aufweist. Der als Trennwand ausgebildete Abschnitt ist bei Betrieb des Verdichters in der Regel unten in einem Bereich, in dem sich auch ein Ölsumpf bildet, angeordnet.

Um eine Ölsättigung des Demistorgestrickes durch Kapillarkräfteeffekte zu vermeiden, wird der Demistor erfindungsgemäß so ausgeführt, dass er nur einen oberen Teil des Ölabscheiderquerschnittes bzw. der Trennvorrichtung zwischen erstem Volumen und zweitem Volumen abdeckt. Dabei wird der untere Teil des Ölabscheiderquerschnittes durch eine Trennwand, zum Beispiel aus Blech gebildet. Durch diese erfindungsgemäße Lösung wird es erreicht, dass das Demistorgestrick nicht in Kontakt mit dem bereits abgeschiedenen Öl kommt. Um das im ersten Raum abgeschiedene Öl in den zweiten Raum abströmen zu lassen, wird (werden) im unteren Teil der Trennwand eine oder mehrere Ölkommunikationsöffnung(en) vorgesehen.

Um sicherzustellen, dass der Ölstand im ersten und im zweiten Raum annähernd gleich hoch ist, sollte der Querschnitt und damit der Strömungswiderstand der Ölkommunikationsöffnungen einen möglichst vorteilhaften Wert haben. Bei wechselnden Betriebsbedingungen, zum Beispiel bei variablem Volumenstrom durch veränderliche Drehzahl des Schraubenläufers, kann sich der optimale Querschnitt der Ölkommunikationsöffnungen, bei dem sich ein annähernd gleich hoher Ölstand im ersten und im zweiten einstellt, ändern. Die Ölkommunikationsöffnungen können deshalb optional mit einem variablen und durch einen Ölniveauregler gesteuerten Querschnitt ausgeführt werden.

Weitere optionale Merkmale der Erfindung sind in den Unteransprüchen, sowie der folgenden Figurenbeschreibung angegeben. Die beschriebenen jeweiligen Merkmale können einzeln oder in beliebigen Kombinationen realisiert sein. Die Erfindung wird demnach im Folgenden mit Bezug auf die beiliegenden Zeichnungen anhand von beispielhaften Ausführungsformen beschrieben. In den Zeichnungen zeigen:
Fig. 1 eine Ansicht einer beispielhaften Ausführungsform eines erfindungsgemäßen Verdichters;
Fig. 1a eine Ansicht einer alternativen (zweiten) Ausführungsform eines erfindungsgemäßen Verdichters

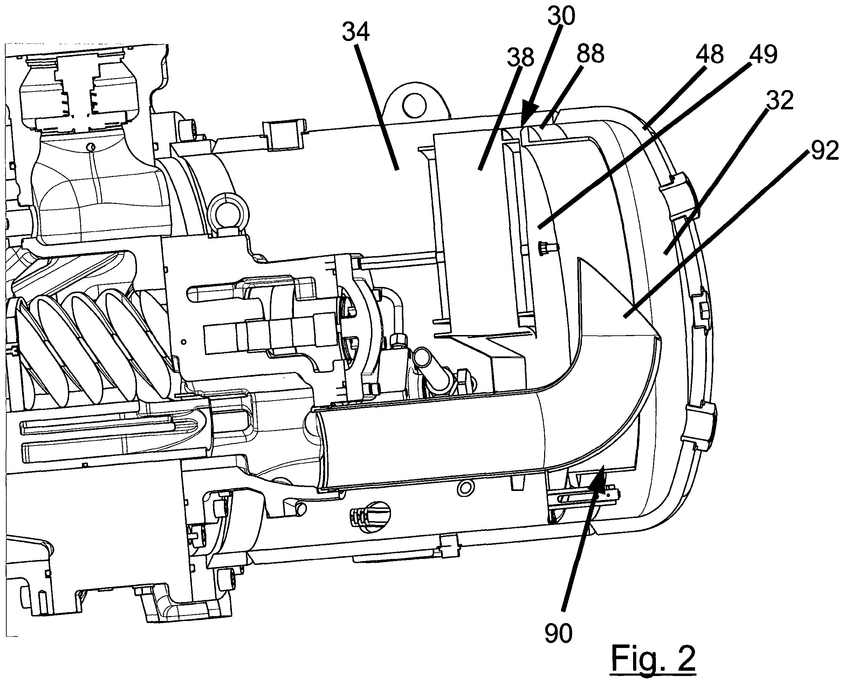

Fig. 2 eine vergrößerte Darstellung eines Teilabschnitts der Fig.1;
Fig. 3 eine Schnittansicht eines ersten Volumens einer Ölabscheidevorrichtung mit einer Mengeneinstell- bzw. Strömungsbegrenzungsvorrichtung, die sich in einer ersten Stellung befindet;
Fig.4 die Ansicht der Fig. 3, wobei sich die Mengeneinstellvorrichtung in einer zweiten Stellung befindet;
Fig. 5 das erste Volumen in einer perspektivischen Ansicht ohne Wände;
Fig. 6 eine Schnittansicht eines Ausschnitts der Ölabscheidevorrichtung;
Fig. 7 die Mengeneinstellvorrichtung in einer Zwischenstellung;
Fig. 8 die Mengeneinstellvorrichtung in der zweiten Stellung; und
Fig. 9 die Mengeneinstellvorrichtung in der ersten Stellung.

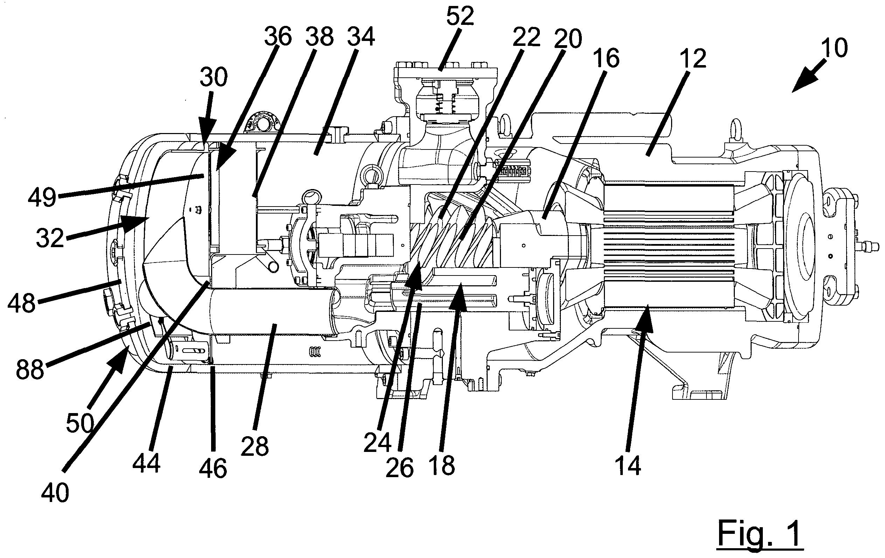

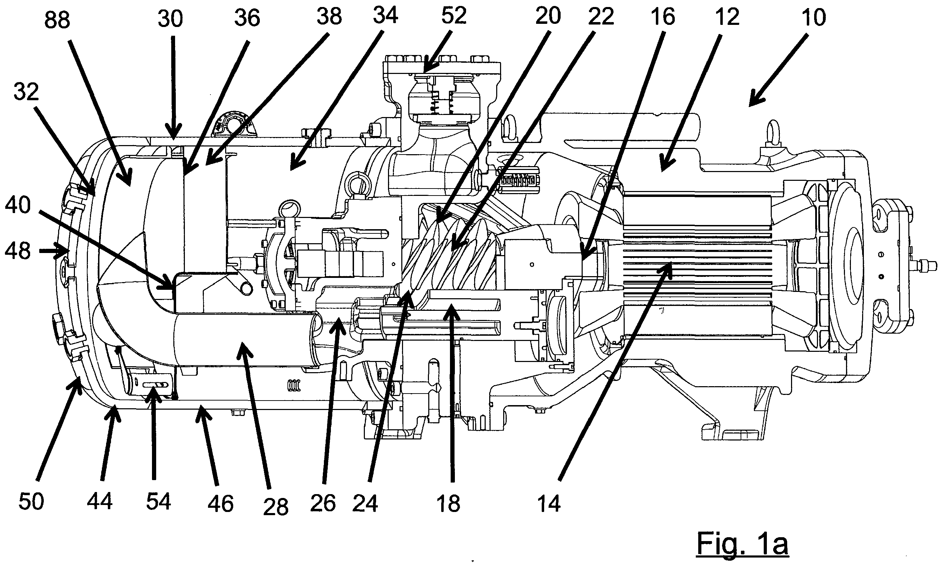

In Fig. 1 ist eine mögliche Ausführungsform eines erfindungsgemäßen Verdichters, genauer eines erfindungsgemäßen Schraubenverdichters 10, der nachstehend auch kurz als Verdichter 10 bezeichnet wird, dargestellt. Der Verdichter 10 weist ein Gehäuse 12 und einen in dem Gehäuse 12 angeordneten Elektromotor 14 auf. Ferner weist der Verdichter 10 eine Antriebswelle 16 und eine Verdichtungsvorrichtung 18, die einen Schraubenläufer 20 und einen zweiten Schraubenläufer 22, der mit dem ersten Schraubenläufer 20 in Eingriff steht, aufweist. Die Schraubenläufer 20, 22 werden über die Antriebswelle 16 direkt (in alternativen Ausführungsformen indirekt, beispielsweise über eine Getriebeanordnung) dreh-angetrieben. Alternativ ist auch ein Schraubenverdichter 10 mit nur einem Schraubenläufer denkbar.

Der erste Schraubenläufer 20 ist um eine erste, in axialer Richtung angeordnete Drehachse drehbar angeordnet. Der zweite Schraubenläufer 22 ist um eine zweite Drehachse, welche sich parallel zu der ersten Drehachse erstreckt, drehbar angeordnet. Sowohl der erste als auch der zweite Schraubenläufer 20, 22 sind in einem Verdichtungsraum 24 angeordnet, der gegen die Umgebung hin wenigstens abschnittweise fluiddicht ausgebildet ist und in ein Hochdruckvolumen 26 mündet.

Der Verdichter 10 der beschriebenen Ausführungsform arbeitet in einer ölüberfluteten Betriebsweise, in welcher im Verdichter 10 befindliches Öl sowohl als Schmiermittel, als auch (beispielsweise beim Verdichtungsvorgang selbst) als Dichtmittel verwendet wird.

Dies heißt, dass das zu verdichtende Medium, beispielsweise Kältemittel, Öl, insbesondere in Tropfenform oder als Aerosol, mitführt bzw. mit Öl vermischt ist. Nach dem durch die Verdichtungsvorrichtung 18 bewirkten Verdichtungsvorgang wird das verdichtete Medium -Öl-Gemisch (Gas-Öl-Gemisch) dann über das Hochdruckvolumen 26 über ein Druckrohr 28 einer Ölabscheidevorrichtung 30 zugeführt.

Der Verdichter 10 bzw. die Ölabscheidevorrichtung 30 des Verdichters 10 weist hierzu ein erstes Volumen 32 in Form einer ersten Kammer und ein zweites Volumen 34 in Form einer zweiten Kammer auf, wobei das erste Volumen 32 und das zweite Volumen 34 durch eine Trennvorrichtung 36 getrennt sind. Die Trennvorrichtung 36 weist einen Demistor 38 auf, der in einem ersten Abschnitt (in der Regel einem oberen Abschnitt) der Trennvorrichtung 36 angeordnet ist. Ferner ist ein zweiter Abschnitt (in der Regel ein unterer Abschnitt) der Trennvorrichtung 36 als Trennwand 40 ausgebildet oder weist eine Trennwand 40 auf, wobei die Trennwand 40 eine oder mehrere (in der vorliegend beschriebenen Ausführungsform eine) Aussparung(en) in Form von (einer) Ölkommunikationsöffnung(en) 42 aufweist, durch welche Öl vom ersten Volumen 32 in das zweite Volumen 34 gelangen kann, wodurch ein Ausgleich des Ölstands im ersten Volumen 32 und im zweiten Volumen 34 ermöglicht wird. In alternativen Ausführungsformen weist die Trennwand 40 keine Ölkommunikationsöffnungen 42 auf.

In dem ersten Volumen 32 findet eine Öl-Vorabscheidung aus dem verdichteten Medium, das in der beschriebenen Ausführungsform, wie bereits vorstehend erwähnt,aus ölführendem Kältemittel besteht, statt, bei der sich Öl an Wandungen des ersten Volumens 32, welches eine in etwa zylinderförmige Gehäuseseitenwand 44 aufweist, die an einem ersten Ende 46 durch eine Stirnwand 48 und an einem der Stirnwand 48 gegenüberliegenden zweiten Ende 50 durch die Trennvorrichtung 36 begrenzt ist. Danach durchströmt das Kältemittel ein in Strömungsrichtung vor dem Demistor angeordnetes Lochblech 49 und danach den Demistor 38, welcher zum Abscheiden von weiterhin im Kältemittel befindlichem Öl ein Demistorgestrick aufweist. Im zweiten Volumen 34 wird dann noch vom Kältemittel mitgeführtes Öl in einem letzten Abscheidevorgang aus dem Kältemittel abgeschieden. Vom zweiten Volumen 34 aus gelangt das verdichtete Medium zu einem Verdichterausgang 52, von wo aus es der jeweiligen gewünschten Anwendung zur Verfügung steht.

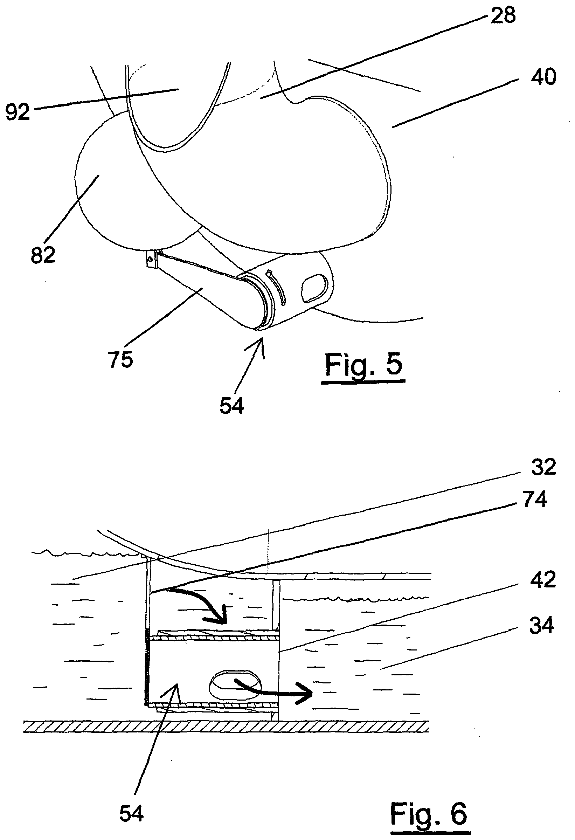

In der beschriebenen und den Figuren dargestellten möglichen Ausführungsform eines erfindungsgemäßen Verdichters weist die Trennwand 40 die Aussparung, auch als Ölkommunikationsöffnung 42 bezeichnet, auf. In alternativen Ausführungsformen kann die Trennwand mehrere Ölkommunikationsöffnungen 42 aufweisen. Zur Einstellung einer gewünschten, die Ölkommunikationsöffnung 42 durchströmenden Ölmenge, weist die Ölabscheidevorrichtung 30 eine Mengeneinstellvorrichtung 54 (vgl. hierzu insbesondere Fig. 5 und 7-9) zum Einstellen einer Menge des Öls auf, das durch die Ölkommunikationsöffnung 42 in einem bestimmten Zeitraum hindurchtreten kann. Es wird demnach die Strömungsrate, d.h. die durch die Ölkommunikationsöffnung 42 hindurchtretende Ölmenge pro Zeit eingestellt. In alternativen Ausführungsformen können mehrere Ölkommunikationsöffnungen 42 mit einer oder aber auch mit getrennten Mengeneinstellvorrichtung(en) 54 in Wirkeingriff stehen. Es ist auch denkbar, dass eine oder mehrere Ölkummunikationsöffnungen 42 ohne eine jeweils zugeordnete Mengeneinstellvorrichtung 54 vorgesehen ist/sind, und dass zusätzlich eine oder mehrere weitere Ölkummunikationsöffnungen 42 mit einer jeweils zugeordnete Mengeneinstellvorrichtung 54 vorgesehen ist/sind.

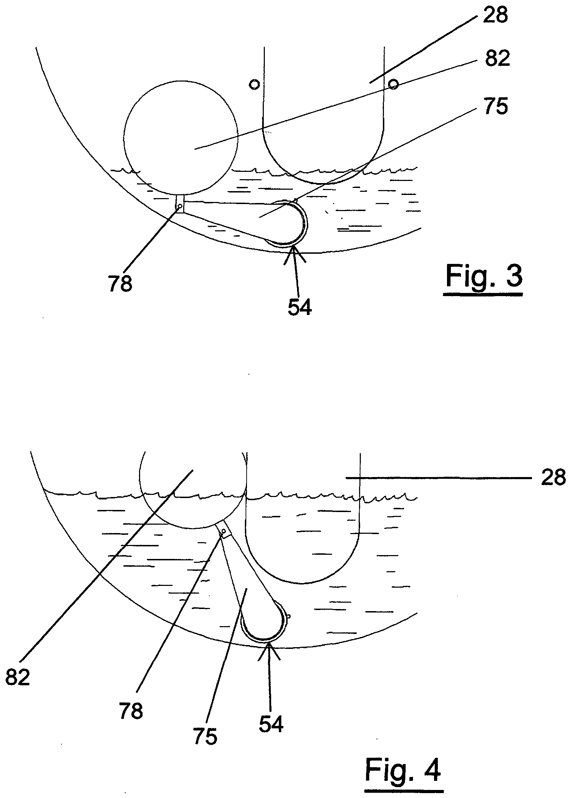

Die Mengeneinstellvorrichtung 54, welche in den Figuren 3 bis 9 detailliert dargestellt ist, weist ein erstes Element in Form einer zylinderförmigen Hohlachse 56 und ein zweites Element in Form einer zylinderförmig ausgebildete Nabe 58 auf. Die Hohlachse 56 ist relativ zu der Nabe 58 konzentrisch und beweglich in der Hohlachse 56 angeordnet. Der Außendurchmesser der Nabe 58 entspricht dabei in etwa dem Innendurchmesser der Hohlachse 56. Die Hohlachse 56 weist eine erste an einem Hohlachsen-Zylindermantel 60 angeordnete Aussparung 62 auf, und die Nabe 58 weist eine zweite an einem Naben-Zylindermantel 64 angeordnete Aussparung 66 auf, wobei die erste Aussparung 62 und die zweite Aussparung 66 durch eine Relativbewegung (in der beschriebenen Ausführungsform Schwenkbewegung) der Hohlachse 56 und der Nabe 58 zueinander deckungsgleich überlappend, teilweise überlappend oder nicht-überlappend anordenbar sind.

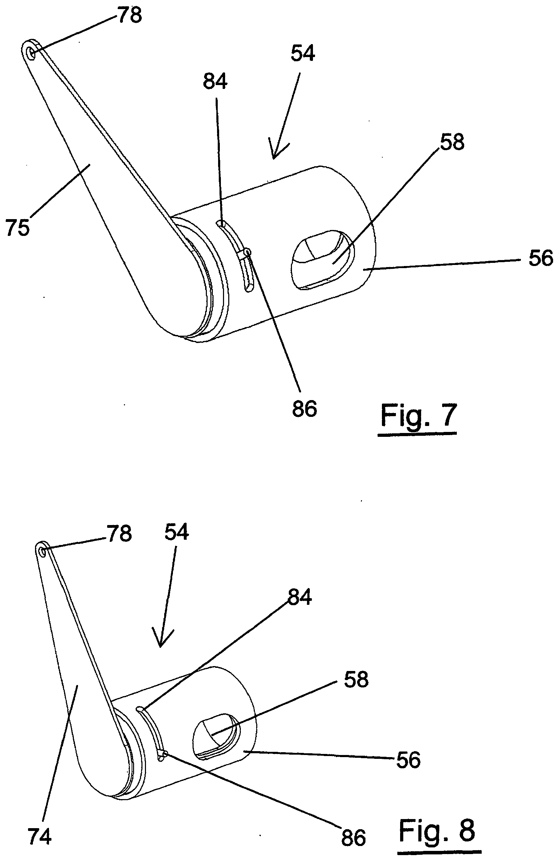

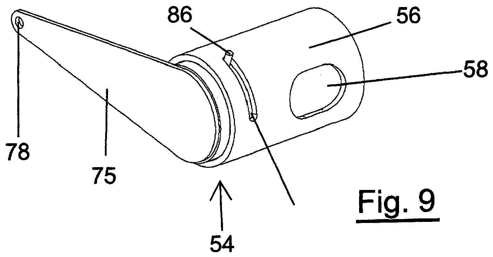

Die Aussparungen (Öffnungen) 62, 66 in der Hohlachse 56 und der Nabe 58 sind durch die Schwenkbewegung relativ zueinander demnach derart anordenbar, dass sie einen maximalen Querschnitt als Öffnung 68 freigeben (vgl. hierzu Fig. 8, Querschnitt ist gleich zu der Größe der ersten oder zweiten Aussparung), dass sie einen beliebigen, durch den Grad der Überlappung bestimmten Querschnitt, der kleiner als die Größe der ersten oder der zweiten Aussparung 60, 62 ist, als Öffnung freigeben (vgl. hierzu Fig. 7), oder aber auch keine Öffnung 68 freigeben (vgl. hierzu Fig. 9) durch die Öl in das Innere des ersten Elements in Form der Nabe 58 gelangen kann. Die erste Aussparung 62 und die zweite Aussparung 66 weisen dieselbe Größe auf, können in alternativen Ausführungsformen aber auch unterschiedliche Größen aufweisen.

Während die Nabe 58, die in der Hohlachse 56 flüssigkeitsdicht gelagert ist, und mit dieser eine Nabe-Hohlachse-Anordnung 70 bildet, an einer ersten Stirnseite 72 der Nabe-Hohlachse-Anordnung 70 flüssigkeitsdicht verschlossen ist, ist Sie an einer zweiten Stirnseite 74 offen. An der zweiten Stirnseite 74 ist die Nabe-Hohlachse-Anordnung 70 in dem ersten Volumen 32 (der ersten Kammer) an bzw. in der Trennwand 40 angeordnet. In der vorliegend beschriebenen Ausführungsform entspricht deshalb der Durchmesser der Ölkommunikationsöffnung 42 in etwa dem Außendurchmesser der Hohlachse 56, so dass die Mengeneinstellvorrichtung 54 mit ihrem der Trennwand 40 zugewandten Ende mittels einer Passung in die Trennwand 40 eingebracht und dort entsprechend flüssigkeitsdicht befestigt, d.h. verschweißt (alternativ verlötet oder geklebt oder mittels Presspassung eingebracht) werden kann. Alternativ wäre es denkbar, die Hohlachse 56 mit ihrer der Trennwand 40 zugewandten Seite in Anlage mit der Trennwand 40 zu bringen und dann eine entsprechende Verschweißung, Verlötung oder Verklebung anzubringen. In diesem Fall kann die Ölkommunikationsöffnung 42 kleiner als der Außendurchmesser der Hohlachse 56 gewählt werden.

Wird in einer ersten möglichen Relativstellung der Nabe 58 zu der Hohlachse 56 ein maximaler Querschnitt als Öffnung freigeben (vgl. hierzu Fig. 6, Querschnitt ist gleich zu der Größe der ersten oder zweiten Aussparung), so kann eine maximale Ölmenge pro Zeiteinheit durch die Öffnung und danach durch die Ölkommunikationsöffnung 42 von dem ersten Volumen 32 in das zweite Volumen 34 strömen. Wird ein beliebiger, durch den Grad der Überlappung bestimmter Querschnitt, der kleiner als die Größe der ersten oder der zweiten Aussparung 62, 66 ist, als Öffnung freigeben (vgl. hierzu Fig. 5), so kann eine vorbestimmte geringere Menge Öl pro Zeiteinheit von dem ersten Volumen 32 in das zweite Volumen 34 strömen. Existiert aufgrund eines nicht vorhandenen Überlapps der ersten und der zweiten Aussparung 62, 66 keine Öffnung, so kann kein Öl von dem ersten Volumen 32 in das zweite Volumen 34 gelangen (vgl. hierzu Fig. 7).

Der Begriff flüssigkeitsdicht bedeutet in der Terminologie der vorliegenden Anmeldung derart abgedichtet, dass Flüssigkeiten mit einer Viskosität des Verwendung findenden Öls oder zähflüssigere Flüssigkeiten die entsprechend Abdichtung oder den entsprechenden Verschluss nicht durchdringen können. Alternativ bedeutet flüssigkeitsdicht für andere Ausführungsformen derart abgedichtet, dass keine Flüssigkeit die entsprechende Abdichtung oder einen entsprechenden Verschluss durchdringen kann.

Zu einer Verstellung des Überlappungsgrads der ersten und der zweiten Aussparung 62, 66 ist an der ersten Stirnseite 72 der Nabe 58 ein Hebel 75 angeordnet, der an einem der Nabe 58 abgewandten ersten Hebel-Ende 76 eine Aussparung in Form einer Bohrung 78 aufweist, an der ein Schwimmer 80 angebracht ist. Der Hebel 75 ist mit der Nabe 58 starr verbunden und somit ebenso wie die Nabe 58 selbst um deren Mittelachse drehbar bzw. schwenkbar. Da sich in dem ersten Volumen 32 das dort abgeschiedene Öl (schwerkraftbedingt) unten ansammelt, bildet sich dort eine Ölansammlung (Ölsumpf), auf welcher der Schwimmer 80, genauer gesagt ein Schwimmerkörper 82 des Schwimmers 80 schwimmt. Je nach der angesammelten Ölmenge befindet sich der Schwimmerkörper 82 in einer näher an der Unterseite des Verdichters 10 befindlichen Position (vgl. hierzu Fig. 3) oder in einer weiter von der Unterseite des Verdichters 10 entfernten Position (vgl. hierzu Fig. 4). Diese Positionsauslenkung führt zu einer Auslenkung des Hebels 75 und somit zu einer Einstellung des Überlappungsgrads der ersten und der zweiten Aussparung 62, 66.

Die in Fig. 3 dargestellte Stellung entspricht dabei der in Fig. 9 dargestellten Stellung des Hebels 75 und somit der Nabe 58 relativ zu der Hohlachse 56, wobei aus Fig. 9 ersichtlich wird, dass in dieser Stellung die erste und die zweite Aussparung 62, 66 nicht überlappen und somit kein Öl in die Nabe 58 und somit durch die Ölkommunikationsöffnung 42 gelangen kann. Hingegen entspricht die in Fig. 4 dargestellte Stellung der in Fig. 8 dargestellten Stellung des Hebels 75 und somit der Nabe 58 relativ zu der Hohlachse 56, wobei aus Fig. 8 ersichtlich wird, dass in dieser Stellung die erste und die zweite Aussparung 62, 66 vollständig überlappen und somit eine maximale Öffnung realisiert wird, durch die Öl von dem ersten Volumen 32 in das zweite Volumen 34 strömen kann.

Die Hohlachse 56 weist ferner eine dritte Aussparung in Form eines Langlochs 84 auf, in die ein korrespondierender stiftförmiger Vorsprung 86, der an der Außenwand der Nabe 58 in einer sich radial nach außen erstreckenden Richtung angeordnet ist, eingreift. Das Langloch 84 ist in der vorliegend beschriebenen Ausführungsform über einen Winkelbereich von 55° ausgebildet, wobei in alternativen Ausführungsformen Winkelbereiche von bis zu 75°, und alternativ bis zu 90° denkbar sind. Damit wird die Relativbewegung (der Schwenk- oder Drehbereich) zwischen Hohlachse 56 und Nabe 58 auf den genannten Winkelbereich beschränkt. In der vorliegend beschriebenen Ausführungsform sind das erste Element in Form der Hohlachse 56 und das zweite Element in Form der Nabe 58 miteinander im Eingriff stehend angeordnet, wobei an einem der beiden Elemente, nämlich der Hohlachse 56 oder der Nabe 58 eine dritte Aussparung, in der vorliegenden Ausführungsform in Form des Langlochs 84, vorgesehen ist in welche ein an dem anderen Element, nämlich der Nabe 58 oder der Hohlachse 56 angeordnetes Führungselement, in der vorliegenden Ausführungsform in Form des stiftförmigen Vorsprungs bzw. Stifts 86), so eingreift, dass die Relativbewegung der beiden Elemente (Hohlachse 56 und Nabe 58) zueinander begrenzt wird, wobei in der einen Endlage die erste Aussparung 62 und die zweite Aussparung 66 zueinander deckungsgleich, jedoch in der anderen Endlage die beiden Aussparungen 62,66 nicht überlappend angeordnet sind.

Die alternative Ausführungsform der Fig. 1a (zweite Ausführungsform) ist identisch zu der ersten Ausführungsform mit Ausnahme davon, dass sie kein Lochblech 49 aufweist.

Zusammenfassend lässt sich der vorstehend beschriebene Gegenstand in anderen Worten ausgedrückt, wie folgt zusammenfassen: ein Gehäuse der Ölabscheidevorrichtung 30 wird durch eine Trennwand 40 in ein erstes Volumen 32 und ein zweites Volumen 34 (einen ersten Raum und einen zweiten Raum) geteilt. Die Trennwand 40 hat eine Öffnung, obenstehend als Ölkommunikationsöffnung 42 bezeichnet, durch die Öl vom ersten Raum in den zweiten Raum strömen kann. Eine Hohlachse 56, deren Außendurchmesser dem Durchmesser der Öffnung 42 entspricht, ist in diese Öffnung 42 eingepasst an der Trennwand 40 befestigt. Die Hohlachse 56 dient als Achse, um die ein Schwimmereinsatz bzw. Schwimmer 80 drehbar angeordnet ist. Der Schwimmereinsatz besteht aus einem Hebel 75, der an einer Nabe 58 befestigt ist. Die Nabe 58 ist als Rohr ausgeführt, wobei der Innendurchmesser der Nabe 58 in etwa gleich groß dem Außendurchmesser der Hohlachse 56 ist. Ein Stift 86 ist so an der Hohlachse 56 angeordnet, dass dieser in einen Schlitz (Aussparung bzw. Langloch 84) in der Nabe 56 so eingreift, dass erstens der Schwimmereinsatz kaum axiale Bewegungsmöglichkeit auf der Hohlachse 56 besitzt und zweitens die Schwenkbewegung des Schwimmereinsatzes um die Hohlachse 56 auf einen Winkel, der im ausgeführten Beispiel 55° beträgt, begrenzt ist und dass diese Schwenkbewegung durch den Stift 86 zwei Endanschläge besitzt.

Am äußeren Ende des Hebels 75 ist eine Schwimmerkugel (Schwimmerkörper 82) angeordnet. Abhängig vom Füllstand des Öles im ersten Volumen 32 wird der Hebel 75 des Schwimmereinsatzes durch die auf dem Öl schwimmende Schwimmerkugel nach oben oder unten geschwenkt.

Eine Querbohrung in der Hohlachse 56 (erste Aussparung 62) sowie eine Querbohrung in der Nabe 58 (zweite Aussparung 66) des Schwimmereinsatzes sind so angeordnet, dass diese sich koaxial überdecken, wenn der Schwimmereinsatz in die obere Endlage ausgeschwenkt ist. Somit kann Öl mit vollem Querschnitt vom ersten Volumen 32 durch die Querbohrung in der Nabe 58, durch die Querbohrung in der Hohlachse 56, durch die Hohlachse 56 und die Öffnung 42 in der Trennwand 40 in das zweite Volumen 34 fließen. Wenn der Schwimmereinsatz in von der oberen Endlage nach unten schwenkt ist, so verkleinert sich kontinuierlich die Überschneidung der Querbohrung in der Hohlachse 56 und der Querbohrung in der Nabe 58, so dass der Querschnitt, durch den Öl von dem ersten Volumen 32 in das zweite Volumen 34 fließen kann, sich mehr und mehr verkleinert. Wenn der Schwimmereinsatz in die untere Endlage ausgeschwenkt ist, so gibt es keine Überschneidung der Querbohrung in der Hohlachse 56 sowie der Querbohrung in der Nabe 58, so dass kein Querschnitt mehr vorhanden ist, durch den Öl vom ersten Volumen 32 in das zweite Volumen 34 fließen kann.

Um zu verhindern, dass Öl, das bereits an der Gehäuseseitenwand 44 und der Stirnwand 48 abgeschieden wurde, wieder von dem strömenden verdichteten Medium mitgerissen wird, ist an der Trennvorrichtung 36 eine Ölabführvorrichtung bzw. Ölablaufvorrichtung 88 angeordnet.

Weiteres mit dem strömenden verdichteten Medium vermischtes Öl wird dann beim Durchtreten des Demistors 38 abgeschieden, welcher hierfür ein Metallgestrick bzw. Metallgeflecht, das in dem durchströmten Gebiet angeordnet ist, aufweist. Es sei an dieser Stelle angemerkt, dass anstelle eines Metall- oder Drahtgestricks auch beispielsweise eine Lamellenkonstruktion denkbar wäre. Ein Metall- oder Drahtgestrick stellt jedoch eine stör-unanfällige und langlebige Konstruktion sicher.

Das erste Volumen 32 ist, wie vorstehend erwähnt, in etwa zylinderförmig ausgebildet, so dass die Trennwand 40 mit dem Demistor 38 in etwa eine kreisförmige Grundfläche hat. Alternativ sind auch andere Ausgestaltungen (rechteckig, sechs- oder achteckig oder mit vielen Ecken versehen) denkbar, insbesondere für Druckbehälter ist aber die in etwa kreisförmige Ausgestaltung oftmals zu bevorzugen. Die Ölabführvorrichtung 88 ist kanalförmig ausgebildet und erstreckt sich von einem radial äußeren Ende der Trennvorrichtung 36 nach innen.

Die in Form eines Kanals ausgebildete Ölabführvorrichtung 88 weist eine im Querschnitt in etwa L-förmig ausgebildete Begrenzung 90, insbesondere Wandung, auf, welche an der Trennvorrichtung 36, in der vorliegend beschriebenen Ausführungsform an der Trennwand 40 angeordnet und mit der (Innenseite der) Gehäuseseitenwand 44 in Anlage ist, welche eine seitliche Begrenzung der Ölabführvorrichtung 88 bildet, sodass diese insgesamt eine Kanalform (in etwa U-förmigen Querschnitt aufweist). Die Ölabführvorrichtung 88 erstreckt sich über einen segmentartigen Abschnitt, genauer einen kreissegmentartigen Abschnitt der Trennwand 40. Dort wo die Ölabführvorrichtung 88 nicht ausgebildet ist, kann das sich darin sammelnde Öl in einen im Verdichter befindlichen Ölsumpf ablaufen. Das heißt, dass die Ölabführvorrichtung 88 an einer im Betrieb des Verdichters 10 unten befindlichen Seite in einem (Kreis-)Sektor von 40° bis 90°, vorzugsweise von 60° bis einschließlich 80° nicht ausgebildet ist bzw. ausgespart ist. Dies heißt in anderen Worten gesagt, dass die Ölabführvorrichtung 88 einen Sektorwinkel von 250° bis 320°, vorzugsweise 280° bis 300° aufweist. In der konkret beschriebenen Ausführungsform beträgt der Sektorwinkel 290°.

Es sei an dieser Stelle angemerkt, dass die Ölabführvorrichtung 88 in alternativen Ausführungsformen auch an der Trennwand 40 und/oder dem Demistor 38, beispielsweise als Vertiefung oder auch in Form einer Stelle reduzierter Materialansammlung, beispielsweise Nut ausgebildet sein kann. Die vorstehend beschriebene Ausführungsform stellt jedoch eine wirkungsvolle Konstruktion sicher, bei der eine optimale Ölabfuhr sichergestellt ist.

Es bleibt zu erwähnen, dass sich das Druckrohr 28 zum Zuführen des verdichteten Mediums, das sich in das erste Volumen 32 hineinerstreckt, in diesem eine 90°-Biegung aufweist und an seinem Auslass 92 zu der der Trennvorrichtung 36 abgewandten Seite hin abgeschrägt ist, so dass ein möglichst großer Innenwandbereich des ersten Volumens 32 angeströmt wird. Dies erleichtert die Öl-Vorabscheidung.

Obwohl die Erfindung anhand von Ausführungsformen mit festen Merkmalskombinationen beschrieben wird, umfasst sie jedoch auch die denkbaren weiteren vorteilhaften Kombinationen, wie sie insbesondere, aber nicht erschöpfend, durch die Unteransprüche angegeben sind. Sämtliche in den Anmeldungsunterlagen offenbarten Merkmale werden als erfindungswesentlich beansprucht, soweit sie einzeln oder in Kombination gegenüber dem Stand der Technik neu sind.

### Bezugszeichenliste:

- 10: Verdichter
- 12: Gehäuse
- 14: Elektromotor
- 16: Antriebswelle
- 18: Verdichtungsvorrichtung
- 20: erster Schraubenläufer
- 22: zweiter Schraubenläufer
- 24: Verdichtungsraum
- 26: Hochdruckvolumen
- 28: Druckrohr
- 30: Ölabscheidevorrichtung
- 32: erstes Volumen
- 34: zweites Volumen
- 36: Trennvorrichtung
- 38: Demistor
- 40: Trennwand
- 42: Ölkommunikationsöffnung
- 44: Gehäuseseitenwand
- 46: erstes Ende der Gehäuseseitenwand 44
- 48: Stirnwand
- 49: Lochblech
- 50: zweites Ende der Gehäuseseitenwand 44
- 52: Verdichterausgang
- 54: Mengeneinstellvorrichtung
- 56: Hohlachse
- 58: Nabe
- 60: Hohlachsen-Zylindermantel
- 62: Aussparung
- 64: Naben-Zylindermantel
- 66: Aussparung
- 68: Öffnung
- 70: Nabe-Hohlachse-Anordnung
- 72: erste Stirnseite der Nabe-Hohlachse-Anordnung
- 74: zweite Stirnseite der Nabe-Hohlachse-Anordnung
- 75: Hebel
- 76: erstes Hebel-Ende
- 78: Bohrung
- 80: Schwimmer
- 82: Schwimmerkörper
- 84: Langloch
- 86: stiftförmiger Vorsprung
- 88: Ölabführvorrichtung
- 90: Begrenzung bzw. Wandung
- 92: Auslass des Druckrohrs 28

## Patentansprüche

1. Schraubenverdichter (10) mit einer Verdichtungsvorrichtung (18), insbesondere wenigstens einem Schraubenläufer (20, 22), die einer Ölabscheidevorrichtung (30) ein verdichtetes Medium zuführt, wobei
die Ölabscheidevorrichtung ein erstes Volumen (32) und ein zweites Volumen (34), sowie eine das erste und das zweite Volumen (32, 34) voneinander trennende Trennvorrichtung (36) aufweist,
wobei die Trennvorrichtung (36) einen Demistor (38) aufweist,
**dadurch gekennzeichnet, dass**
der Demistor (38) in einem ersten Abschnitt, nämlich einem oberen Abschnitt der Trennvorrichtung (36) angeordnet ist, und dass ein zweiter Abschnitt, nämlich ein unterer Abschnitt der Trennvorrichtung (36) als Trennwand (40) ausgebildet ist, welche eine oder mehrere Ölkommunikationsöffnungen (42) aufweist.

2. Verdichter (10) nach Anspruch 1,
**dadurch gekennzeichnet, dass**
der Verdichter (10) für wenigstens eine Ölkommunikationsöffnung (42) eine Mengeneinstellvorrichtung (54) bzw. Volumenstromeinstellvorrichtung zur Einstellung einer Menge bzw. eines Volumenstroms eines Mediums, das die Ölkommunikationsöffnung (42) durchströmt, aufweist

3. Verdichter (10) nach Anspruch 2,
**dadurch gekennzeichnet, dass**
die Mengeneinstellvorrichtung (54) ein erstes und ein zweites Element (56, 58) aufweist, wobei das erste Element (56) relativ zu dem zweiten Element (58) beweglich angeordnet ist, wobei das erste Element (56) eine erste Aussparung (62) aufweist,und das zweite Element (58) einen zweite Aussparung (66) aufweist, wobei die erste Aussparung (62) und die zweite Aussparung (66) durch eine Relativbewegung der beiden Elemente (56, 58) zueinander deckungsgleich, überlappend oder nicht-überlappend anordenbar sind.

4. Verdichter (10) nach Anspruch 3,
**dadurch gekennzeichnet, dass**
die erste Aussparung (62) und die zweite Aussparung (66) dieselbe Größe aufweisen.

5. Verdichter (10) nach Anspruch 3 oder 4,
**dadurch gekennzeichnet, dass**
das erste Element (56) und das zweite Element (58) wenigstens teilweise ineinander oder miteinander in Eingriff stehend angeordnet sind, wobei an einem der beiden Elemente (56, 58) eine dritte Aussparung (84) vorgesehen ist, in welche ein an dem anderen Element angeordnetes Führungselement (86) eingreift.

6. Verdichter (10) nach einem der Ansprüche 2 bis 5,
**dadurch gekennzeichnet, dass**
die Mengeneinstellvorrichtung (54) eine zylinderförmige Hohlachse (56), welche einen Hohlachsen-Zylindermantel und eine/die am Hohlachsen-Zylindermantel (60) angeordnete erste Aussparung (62) aufweist, sowie eine wenigstens teilweise in der Hohlachse (56) gegen dieselbe drehbar angeordnete, zylinderförmig ausgebildete Nabe (58) aufweist, welche einen Naben-Zylindermantel (64) und eine/die am Naben-Zylindermantel (64) angeordnete zweite Aussparung (66) aufweist.

7. Verdichter (10) nach einem der Ansprüche 2 bis 6,
**dadurch gekennzeichnet, dass**
die Mengeneinstellvorrichtung (54) einen Schwimmer (80) aufweist.

8. Verdichter (10) nach Anspruch 7,
sofern Anspruch 7 von Anspruch 3, 4 oder 5 abhängig ist oder sofern Anspruch 7 von Anspruch 6 abhängig ist, wobei Anspruch 6 von Anspruch 3, 4 oder 5 abhängig ist,
**dadurch gekennzeichnet, dass**
die Mengeneinstellvorrichtung (54) einen Hebel (75) aufweist, welcher mit dem Schwimmer (80) in Wirkeingriff steht, wobei der Hebel (75) mit dem ersten oder dem zweiten Element (56, 58) in Wirkeingriff steht.

9. Verdichter (10) nach einem der Ansprüche 3 bis 8,
**dadurch gekennzeichnet, dass**
die Mengeneinstellvorrichtung (56) an der Trennwand angeordnet oder in diese eingepasst ist.

10. Verdichter (10) nach einem der Ansprüche 3,4 oder 6-9,
**dadurch gekennzeichnet, dass**
das erste Element (56) und das zweite Element (58) miteinander im Eingriff stehend angeordnet sind, wobei an einem der beiden Elemente (56 oder 58) eine dritte Aussparung (84), vorzugsweise ein Langloch, vorgesehen ist in welche ein an dem anderen Element angeordnetes Führungselement (86), vorzugsweise eine Stift, so eingreift, dass die Relativbewegung der beiden Elemente (56 oder 58) zueinander begrenzt wird, wobei in der einen Endlage die erste Aussparung (62) und die zweite Aussparung (66) zueinander deckungsgleich, jedoch in der anderen Endlage die beiden Aussparungen (62,66) nicht überlappend angeordnet sind.

## Claims

1. A screw compressor (10) having a compression apparatus (18), in particular at least one screw rotor 5(20, 22) which feeds a compressed medium to an oil separation apparatus (30), the oil separation apparatus having a first volume (32), a second volume (34) and a separation apparatus (36) which separates the first and the second volume (32, 34) from one another, the separation apparatus (36) having a demistor (38), **characterized in that** the demistor (38) is arranged in a first section, namely in an upper section of the separation apparatus (36), and **in that** a second section, namely a lower section of the separation apparatus (36) is configured as a separating wall (40) which has one or more oil communication openings (42).

2. The compressor (10) as claimed in claim 1, **characterized in that**, for at least one oil communication opening (42), the compressor (10) has a quantity setting apparatus (54) or volumetric flow setting apparatus for setting a quantity or a volumetric flow of a medium which flows through the oil communication opening (42).

3. The compressor (10) as claimed in claim 2, **characterized in that** the quantity setting apparatus (54) has a first and a second element (56, 58), the first element (56) being arranged such that it can be moved relative to the second element (58), the first element (56) having a first cutout (62), and the second element (58) having a second cutout (66), it being possible for the first cutout (62) and the second cutout (66) to be arranged so as to be congruent with respect to one another, so as to overlap or so as not to overlap by way of a relative movement of the two elements (56, 58).

4. The compressor (10) as claimed in claim 3, **characterized in that** the first cutout (62) and the second cutout (66) are of the same size.

5. The compressor (10) as claimed in claim 3 or 4, **characterized in that** the first element (56) and the second element (58) are arranged so as to be in engagement at least partially in one another or with one another, a third cutout (84) being provided on one of the two elements (56, 58), into which third cutout (84) a guide element (86) which is arranged on the other element engages.

6. The compressor (10) as claimed in one of claims 2 to 5, **characterized in that** the quantity setting apparatus (54) has a cylindrical hollow axle (56) which has a hollow axle cylindrical shell and a/the first cutout (62) which is arranged on the hollow axle cylindrical shell (60), and has a hub (58) which is of cylindrical configuration, which is arranged at least partially in the hollow axle (56) such that it can be rotated with respect to the latter, which hub has a hub cylindrical shell (64) and a/the second cutout (66) which is arranged on the hub cylindrical shell (64).

7. The compressor (10) as claimed in one of claims 2 to 6, **characterized in that** the quantity setting apparatus (54) has a float (80).

8. The compressor (10) as claimed in claim 7, if claim 7 is depending on claim 3, 4 or 5, or if claim 7 is depending on claim 6, wherein claim 6 is depending on claim 3, 4 or 5, **characterized in that** the quantity setting apparatus (54) has a lever (75) which is in operative engagement with the float (80), the lever (75) being in operative engagement with the first or the second element (56, 58).

9. The compressor (10) as claimed in one of claims 3 to 8, **characterized in that** the quantity setting apparatus (56) is arranged on the separating wall or is fitted into the latter.

10. The compressor (10) as claimed in one of claims 3, 4 or 6-9, **characterized in that** the first element (56) and the second element (58) are arranged so as to be in engagement with one another, a third cutout (84), preferably a slot, being provided on one of the two elements (56 or 58), into which third cutout (84) a guide element (86) which is arranged on the other element, preferably a pin, engages in such a way that the relative movement of the two elements (56 or 58) with respect to one another is limited, the first cutout (62) and the second cutout (66) being arranged so as to be congruent with respect to one another in the one end position, but the two cutouts (62, 66) being arranged so as to not overlap in the other end position.

## Revendications

1. Compresseur à vis (10) comprenant un dispositif de compression (18), en particulier au moins un rotor à vis (20, 22), qui amène un milieu comprimé à un dispositif séparateur d'huile (30),
lequel dispositif séparateur d'huile présente un premier volume (32) et un deuxième volume (34) ainsi qu'un dispositif de séparation (36) qui sépare le premier et le deuxième volume (32, 34) l'un de l'autre,
le dispositif de séparation (36) présentant un dévésiculeur (38),
**caractérisé en ce**
**que** le dévésiculeur (38) est disposé dans une première partie, notamment une partie supérieure du dispositif de séparation (36), et qu'une deuxième partie, notamment une partie inférieure du dispositif de séparation (36), est constituée par une cloison (40) qui présente une ou plusieurs ouvertures de communication d'huile (42).

2. Compresseur (10) selon la revendication 1,
**caractérisé en ce**
**que** le compresseur (10) présente, pour au moins une ouverture de communication d'huile (42), un dispositif de réglage de quantité (54) ou un dispositif de réglage de débit pour régler une quantité ou un débit d'un milieu qui passe à travers l'ouverture de communication d'huile (42).

3. Compresseur (10) selon la revendication 2,
**caractérisé en ce**
**que** le dispositif de réglage de quantité (54) présente un premier et un deuxième élément (56, 58), le premier élément (56) étant disposé mobile par rapport au deuxième élément (58), le premier élément (56) présentant un premier évidement (62) et le deuxième élément (58) présentant un deuxième évidement (66), le premier évidement (62) et le deuxième évidement (66) pouvant être disposés de manière à coïncider, à se chevaucher ou à ne pas se chevaucher par un mouvement relatif des deux éléments (56, 58) l'un par rapport à l'autre.

4. Compresseur (10) selon la revendication 3,
**caractérisé en ce**
**que** le premier évidement (62) et le deuxième évidement (66) sont de la même taille.

5. Compresseur (10) selon la revendication 3 ou 4,
**caractérisé en ce**
**que** le premier élément (56) et le deuxième élément (58) sont disposés de manière à être en prise au moins partielle l'un dans l'autre ou l'un avec l'autre, un troisième évidement (84) étant prévu sur un des deux éléments (56, 58), dans lequel s'engage un élément de guidage (86) disposé sur l'autre élément.

6. Compresseur (10) selon l'une des revendications 2 à 5,
**caractérisé en ce**
**que** le dispositif de réglage de quantité (54) présente un axe creux cylindrique (56) qui présente une enveloppe cylindrique d'axe creux et un/le premier évidement (62) disposé sur l'enveloppe cylindrique d'axe creux (60) ainsi qu'un moyeu cylindrique (58) disposé au moins partiellement dans l'axe creux (56) de manière à pouvoir tourner par rapport à celui-ci, lequel présente une enveloppe cylindrique de moyeu (64) et un/le deuxième évidement (66) disposé sur l'enveloppe cylindrique de moyeu (64).

7. Compresseur (10) selon l'une des revendications 2 à 6,
**caractérisé en ce**
**que** le dispositif de réglage de quantité (54) présente un flotteur (80).

8. Compresseur (10) selon la revendication 7,
à condition que la revendication 7 dépende de la revendication 3, 4 ou 5 ou à condition que la revendication 7 dépende de la revendication 6, la revendication 6 dépendant de la revendication 3, 4 ou 5,
**caractérisé en ce**
**que** le dispositif de réglage de quantité (54) présente un levier (75) qui est en prise fonctionnelle avec le flotteur (80), le levier (75) étant en prise fonctionnelle avec le premier ou le deuxième élément (56, 58).

9. Compresseur (10) selon l'une des revendications 3 à 8,
**caractérisé en ce**
**que** le dispositif de réglage de quantité (56) est disposé sur la cloison ou adapté dans celle-ci.

10. Compresseur (10) selon l'une des revendications 3, 4 ou 6 à 9,
**caractérisé en ce**
**que** le premier élément (56) et le deuxième élément (58) sont disposés de manière à être en prise l'un avec l'autre, un troisième évidement (84), de préférence un trou oblong, étant prévu sur l'un des deux éléments (56 ou 58), dans lequel un élément de guidage (86), de préférence une broche, disposé sur l'autre élément s'engage de sorte que le mouvement relatif des deux éléments (56 ou 58) l'un par rapport à l'autre soit limité, le premier évidement (62) et le deuxième évidement (66) étant disposés de manière à coïncider dans une position extrême et les deux évidements (62, 66) étant disposés de manière à ne pas se chevaucher dans l'autre position extrême.
